Europäisches Patentamt

European Patent Office

Office européen des brevets

(11) Veröffentlichungsnummer: **0 153 974**
**A1**

(12) **EUROPÄISCHE PATENTANMELDUNG**

(21) Anmeldenummer: **84102575.2**

(22) Anmeldetag: **09.03.84**

(51) Int. Cl.⁴: **B 01 D 1/00**

(43) Veröffentlichungstag der Anmeldung:
11.09.85 Patentblatt 85/37

(84) Benannte Vertragsstaaten:
AT BE CH DE FR GB IT LI LU NL SE

(71) Anmelder: Klemens Waterkotte
Gewerkenstrasse 15
D-4690 Herne 1(DE)

(72) Erfinder: Klemens Waterkotte
Gewerkenstrasse 15
D-4690 Herne 1(DE)

(74) Vertreter: Herrmann-Trentepohl, Werner,
Dipl.-Ing. et al,
Schaeferstrasse 18
D-4690 Herne 1(DE)

(54) Verteiler für Gas-Flüssigkeit-Gemische, die aus dem von einem Gas gebildeten oder aus mehreren Gasen zusammengesetzten Dispersionsmittel mit der darin verteilten, von einer oder mehreren Flüssigkeiten gebildeten dispersen Phase bestehen.

㊄ Verteiler für Gemische aus mindestens einem Gas als Dispersionsmittel und der darin verteilten dispersen Phase aus mindestens einer Flüssigkeit. Die Vorrichtung weist eine Kammer (1) mit einem Einlaß (5) und vorzugsweise mehreren Auslässen (8-15) auf. Zwischen Einlaß und Auslässen wird die Kammer durch mindestens einen Lochboden (24, 25) unterteilt, der das Gas-Flüssigkeitsgemisch in stark beschleunigte Teilströme aufteilt und dadurch innig vermischt. Die Teilströme werden z.B. direkt auf die Rohre eines Rohrbündel-Wärmeaustauschers (49) verteilt.

Fig.1

erne 1,
rstraße 18
▪ 1140

w. Herrmann-Trentepohl
echer: 0 23 23 / 5 10 13
         5 10 14

rmmanschrift:
igale Herne
▪ 08 229 853

Dipl.-Ing. R. H. Bahr (1931-1981)
Dipl.-Phys. Eduard Betzler
Dipl.-Ing. W. Herrmann-Trentepohl
Dipl.-Ing. Josef Bockhorni
PATENTANWALTE
PROFESSIONAL REPRESENTATIVES
BEFORE THE EUROPEAN PATENT OFFICE

8000 München 70
Plinganserstr. 18 a
Postfach 70 02 09

015397 4

Fernsprecher. 089 / 7 25 40 63
                     7 25 40 64
                     7 25 40 65

Telegrammanschrift:
Babetzpat München
T e l e x  5 215 360
Telefax 089 79 89 88

Bankkonten:
Bayerische Vereinsbank München 952 287
BLZ 700 202 70
Dresdner Bank AG Herne 7-520 499
BLZ 432 800 84
Postscheckkonto Dortmund 558 68-467
BLZ 440 100 46

Ref.: A 31 514 X/Wd.
In der Antwort bitte angeben

Zuschrift bitte nach:

H e r n e        1

8. März 1984

— 1 —

Klemens Waterkotte, Gewerkenstr. 15, D-4690 Herne 1

---

"Verteiler für Gas-Flüssigkeit-Gemische, die aus dem
von einem Gas gebildeten oder aus mehreren Gasen zusammengesetzten Dispersionsmittel mit der darin verteilten, von
einer oder mehreren Flüssigkeiten gebildeten dispersen
Phase bestehen"

---

Die Erfindung betrifft einen Verteiler für Gas-
Flüssigkeit -Gemische gemäß dem Oberbegriff des
Anspruches 1 und zwar Zweiphasenfluide, vorzugsweise solche,
deren gasförmiges Dispersionsmittel ebenso wie die
darin verteilte flüssige disperse Phase exakt an
der Siedetemperatur liegen. Im allgemeinen ist
dabei in der Mischung der Anteil der dispersen Phase,
also der Flüssigkeit wesentlich kleiner als der des
gasförmigen Dispersionsmittels.

Die Erfindung geht von einem Wärmeaustauscher, d.h.
einem Verflüssiger bzw. einem Verdampfer aus, in denen
der Verteiler die Vorderkammer eines Rohrbündels bil-

- 2 -

det, das von einem Fluid dieser Art durchströmt wird, in dem die flüssige und die gasförmige Phase der Mischung aus einem Kältemittel besteht. Bei solchen und anderen Fluiden kommt es leicht wegen der Gravitation und der Massenkräfte aufgrund der Strömungsdynamik zur Entmischung der dispergierten Flüssigkeit und des dispersen Gases. Diese Neigung ist störend. Insbesondere setzt sie die Verdampfungsleistung stark herab.

Bei den bekannten Verdampfern liegt unmittelbar hinter dem Expansionsventil noch eine gute Mischung vor, die Entmischungstendenz setzt jedoch schon vor dem Rohrbündelwärmeaustauscher ein. Dort hat man sie bislang als naturgesetzlich und daher als unveränderlich hingenommen. Infolgedessen bemüht man sich bisher, den damit verbundenen Nachteilen durch eine entsprechende Dimensionierung der Kammer und der Rohre entgegenzuwirken. Das bedeutet jedoch einen erheblichen Aufwand, der eine wirtschaftliche Grenze findet und bewirkt, daß die sich aus der beschriebenen Entmischungstendenz ergebenden Nachteile nicht voll beseitigt werden können.

Der Erfindung liegt die Aufgabe zugrunde, bei einem Verteiler der eingangs als bekannt vorausgesetzten Art auf einfache Weise zu erreichen, daß der Auslaß der Kammer, d.h. die diesen bildenden Öffnungen in der Kammerrückwand mit einem Gemisch beaufschlagt werden, in dem die Entmischung wieder weitgehend rückgängig gemacht ist.

Diese Aufgabe löst die Erfindung mit den Merkmalen des Anspruches 1. Zweckmäßige Ausführungsformen der Erfindung sind Gegenstand ihrer Unteransprüche.

Gemäß der Erfindung wird durch die Lochbodenanordnung die Kammer mindestens in eine Vorkammer und eine von dem Lochboden und der Kammerrückwand mit den Öffnungen begrenzte Hauptkammer, vorzugsweise aber in mehrere, z.B. in zwei Teilkammern zerlegt, die in Strömungsrichtung hintereinandergeschaltet sind und deswegen von dem Gemisch auf seinem Wege z.B. vom Expansionsventil zu einem Wärmeaustauscher bzw. Verdampfer passiert werden müssen. Die gewünschte starke Beschleunigung der die Lochungen passierenden Teilströme ergibt sich hierbei aus den entsprechend eng ausgebildeten Querschnitten der Durchbrüche in den Lochböden und/oder dem offenen Gesamtquerschnitt des betreffenden Lochbodens.

Die so gebildeten Teilströme führen aufgrund ihrer hohen kinetischen Ernergie zu einer hochgradigen Zerteilung und Vermischung der dispersen Phase mit dem Dispersionsmittel. Bei ihrem Eintritt in den relativ großen Querschnitt der auf dem betreffenden Lochboden folgenden Teilkammer beeinflussen sich die Teilströme gegenseitig und führen zu Sekundärwirbeln. Die danach erneut einsetzende Entmischung läßt sich jedoch mit der Größe des insgesamt in der Verteilerkammer entstehenden Druckabbaus in Beziehung bringen. Entweder ist dieser Druckabbau wie z.B. in einem Kältekreislauf ohnehin funktionsbedingt oder er läßt sich durch einen entsprechenden, jedoch in der Vorrichtung meistens nicht schädlichen Mehraufwand an Energie soweit erforderlich rückgängig machen. Am einfachsten läßt sich bei vorzugsweise gleicher Ausbildung der Lochböden mit deren entsprechend gewählter Anzahl und der dadurch geschaffenen Anzahl von Teilkammern der gewünschte Durchmischungsgrad an den Öffnungen der Kammerrückwand einhalten. Die Größe des Druckausbaus bestimmt somit wesentlich den Vermischungsgrad an den Öffnungen.

Versuche mit Verdampfern haben gezeigt, daß bereits eine Zwischenkammer, also der Einbau von zwei Lochblechen zu einer außerordentlichen Verbesserung der Verdampferleistung führt. Diese beruht ganz offensichtlich darauf, daß die Einspritzung in die Verdampferrohre des Fluids in fein vernebelter Form erfolgt und dadurch der Wärmeübergangsfaktor auf den Rohrinnenwänden und damit der Verdampfungseffekt verbessert wird.

Messungen haben Verbesserungen des Wärmeübergangsfaktors um das Dreifache der früheren Werte ergeben z.B. von 2.500 W/m²K auf 7.500 W/m²K. Das ist neben der durch die bessere Vernebelung verbesserte Rohrbenetzung auch auf die verbesserte Verteilung des Kältemittels auf parallel geschaltete Rohre zurückzuführen.

Der erfindungsgemäße Verteiler kann daher auch als Kältemittelverteiler eingesetzt werden und bietet ferner die Möglichkeit, auch die an Wärmeaustauschern, Zerstäubungseinrichtungen, Vernebelungsanlagen, Schneeherstellungsanlagen und an Einrichtungen zu verbessern, die zur Druckminderung und Pulsationsdämpfung dienen. Sowohl auf dem bevorzugten Anwendungsgebiet der Erfindung wie auch bei ihren anderen Anwendungen ergibt sich als weiterer Vorteil, daß die beschriebene feine Vernebelung auch bei Fluiden auftritt, die extreme Dampf/Flüssigkeitsverhältnisse von z.B. 30/1 auftritt.

Es hat sich ferner ergeben, daß es vorteilhaft ist, in den Teilkammern, also in Strömungsrichtung hinter den Lochböden einen übermäßigen Energieabbau zu vermeiden. Das ist mit den Merkmalen des Anspruches 2 möglich. Solche Ausführungsformen der Erfindung haben außerdem den Vorteil, daß sie eine Vereinfachung in der Fertigung ermöglichen, wenn die Lochböden in Ebenen quer zur allgemeinen Durchströmungsrichtung der Verteiler angeordnet werden, weil dann die Achsen der Durchbrüche orthogonal zur Bodenebene verlaufend angeordnet und die meistens aus Blechen bestehenden Böden durch Bohren mit ihren Durchbrüchen versehen werden können. Besonders vorteilhaft sind Ausführungsformen der Erfindung, die zusätzlich die Merkmale des Anspruches 3 verwirklichen.

Nicht immer werden die Gas-Flüssigkeit-Gemische, welche den Verteiler durchströmen, in allen Betriebsphasen gleich sein. Gleichwohl läßt sich die gewünschte Feinverteilung an den Öffnungen der Kammerrückwand auch dann aufrecht erhalten. Das gestatten die Merkmale des Anspruches 5 und 6. Hierdurch können während des Betriebes mit Hilfe entsprechender Getriebe, z.B. mit Hilfe von Schrauben die Querschnitte der Durchbrüche dem strömenden Gas-Flüssigkeit-Gemisch angepaßt werden. Damit läßt sich die weitere Einstellmöglichkeit nach Anspruch 7 kombinieren, aber auch für sich allein verwirklichen.

Zur Vergleichmäßigung der Strömungen in den in der Kammerrückwand vorgesehenen Öffnungen und damit bei Wärmeaustauschern in den Rohren des Bündels ist es zweckmäßig, von den Merkmalen des Anspruches 8 Gebrauch zu machen. Man erreicht dadurch einen Richteffekt der aus den Durchbrüchen des am weitesten stromabwärts gelegenen Lochbodens austretenden Teilströme auf die Öffnungen in der Kammerrückwand, ohne daß dadurch die Möglichkeit einer Optimierung des Durchmischungseffektes in den Zwischenkammern aufgegeben werden muß.

Mit den Merkmalen des Anspruches 7 bekommt man eine weitere Möglichkeit, auch während des Betriebes den Grad der Durchmischung des Gas-Flüssigkeit-Gemisches zu verändern, indem man die Tiefe der Teilkammern vergrößert oder verkleinert und dadurch die Parameter einstellt, von denen die Entmischungstendenz abhängt. Man erhält dadurch eine sehr empfindliche Einstellung des Durchmischungseffektes in einem gegebenen Verteiler, insbesondere wenn man damit weitere Einstellmöglichkeiten, z.B. die nach Anspruch 6 kombiniert.

Die Einzelheiten, weiteren Merkmale und andere Vorteile der Erfindung ergeben sich aus der nachfolgenden Beschreibung eines Ausführungsbeispieles der bevorzugten Anwendung der Erfindung auf einen Verdampfer anhand der Figuren in der Zeichnung; es zeigen

Fig. 1 schematisch und in abgebrochener Darstellung die Vorkammer eines Rohrbündelwärmeaustauschers gemäß der Erfindung, wobei die Vorrichtung im Längsschnitt wiedergegeben ist und

Fig. 2 insgesamt sechs Darstellungen verschieden ausgeführter Lochböden, die in der Vorrichtung
nach Fig. 1 angewandt werden können.

Der allgemein mit 1 bezeichnete Verteiler besteht aus
einem Rohrabschnitt, d.h. aus einer Kammer, deren
Seitenwand 2 zylindrisch ausgebildet ist. Diese Kammer
hat eine scheibenförmige Vorderwand 3 mit einem mittleren Durchbruch 4, in den ein Rohrstutzen 5 eingesetzt
ist. Der Pfeil 6 bezeichnet die Strömungsrichtung eines
Gas-Flüssigkeit-Gemisches, das bei dem dargestellten
Ausführungsbeispiel aus der das Dispersionsmittel bildenden gasförmigen Phase eines Kältemittels besteht, in der
die Form von feinen Tröpfchen die flüssige Phase des
Kältemittels als disperse Phase verteilt ist.

Die Kammerrückwand 7 ist demzufolge ebenfalls scheibenförmig und identisch mit einem Rohrboden, in den eine
Mehrzahl von Rohren eingewalzt ist, von denen einige
mit 8 bis 15 bezeichnet sind. Selbstverständlich liegen
die Öffnungen 16 bis 23, die den Rohren 8 bis 15 zugeordnet sind, auf Lochkreisen, so daß sich eine im wesentlichen gleiche Verteilung der Öffnungen 16 bis 23
auf der die Kammerrückwand 7 bildenden Scheibe ergibt.

Die den Verteiler bildende Kammer ist gemäß dem dargestellten Ausführungsbeispiel mit je einem Lochboden 24
bzw.25 in eine Vorkammer 26, eine Zwischenkammer 27 und
eine Hauptkammer 28 gas- und flüssigkeitsdicht unterteilt. Die beiden Lochböden 24, 25 sind identisch und
eben ausgebildet. Sie weisen eine der Anzahl der Öffnungen 16 bis 23 entsprechende Anzahl von Durchbrüchen 29 bzw. 30 auf, die von dem Gas-Flüssigkeit-Gemisch durchströmt werden und aus diesem bestehende Strahlen erzeugen, in denen verhältnismäßig stark beschleunigte Teilströme auftreten. Auf der Rückseite 31 des Lochbodens 34 bzw. der Rückseite 32 des Lochbodens 25 sind Strahlen 33 bzw.34 schematisch angedeutet. Sie breiten sich in der auf den jeweiligen Lochboden 24, 25 folgenden Teilkammer 27 bzw. 28 aus. Wie durch die Darstellung angedeutet ist, ergibt sich in diesen Strahlen eine feine Verteilung der dispersen Phase im Dispersionsmittel durch die starke Beschleunigung in den entsprechend engen Durchbrüchen.

Abweichend von dem dargestellten Ausführungsbeispiel können die Abstände der Lochböden 24, 25 voneinander bzw. von der Kammerrückwand 7 bzw. der Kammervorderwand 3 verstellbar eingerichtet sein. Dazu kann ein Schraubengetriebe dienen. Das ermöglicht die Einstellung der an den Lochböden eintretenden Vermischung des Gas-Flüssigkeit-Gemisches auf geänderte Ausgangsbedingung, z.B. wechselnde Mengen des Gas-Flüssigkeit-Gemisches oder seiner verschiedenen Phasen.

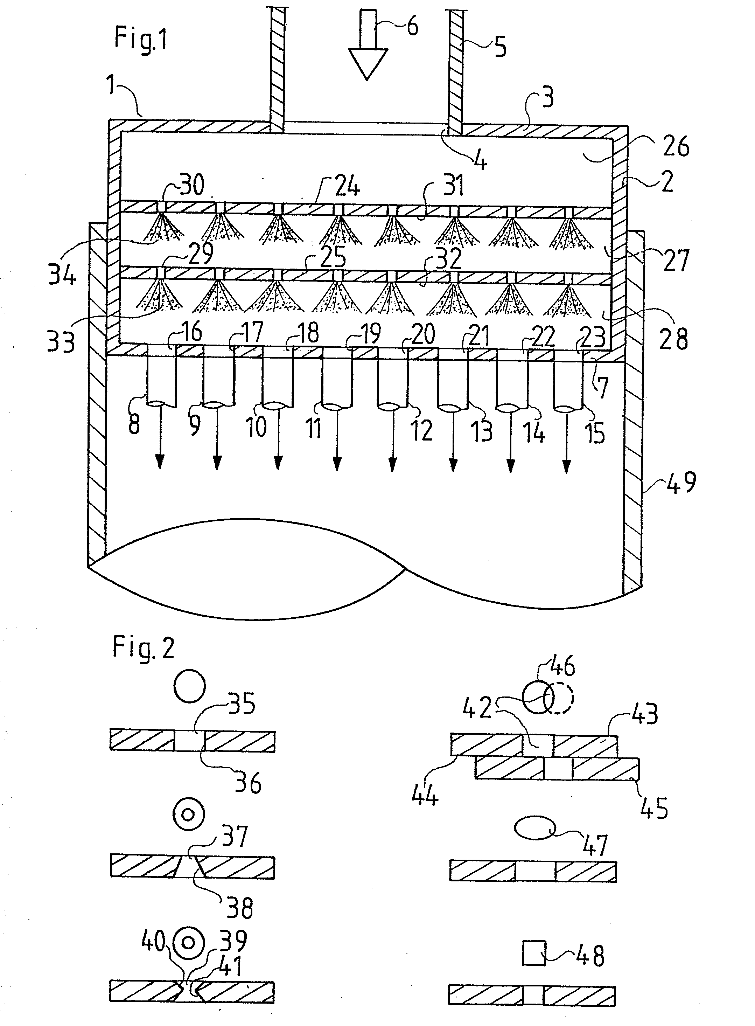

Die Darstellung der Fig. 2 zeigt in der linken oberen Zeichnung einen einfachen Durchbruch 35 mit einer zylindrischen Mantelfläche 36. Die darunterstehende Zeichnung gibt einen Durchbruch 37 wieder, der sich in Strömungsrichtung konisch erweitert, was bei 38 gezeichnet ist. Ein solcher Durchbruch hat etwa die Form einer Lavaldüse.

In der linken unteren Darstellung der Fig. 2 ist dagegen ein weiterer Durchbruch 39 verwirklicht, der eine venturiartige Düsenform verwirklicht, wobei der angeströmte Querschnitt sich zunächst konzentrisch, wie bei 40 angedeutet, vermindert, um sich dann etwa in der Mitte des Lochbodens wieder düsenförmig, wie bei 41 gezeigt, zu erweitern.

In der rechten Darstellung der Fig. 2 ist schematisch eine Einstellmöglichkeit für den Querschnitt eines Durchbruches 42 dargestellt. Zu diesem Zweck ist ein in Strömungsrichtung vorgeschalteter Lochboden 43 stationär angeordnet, während ein der Unterseite 44 des Lochbodens 43 aufliegender nachgeschalteter Lochboden 45 verschieblich eingerichtet ist. Wie man hieraus erkennt, wird auf diese Weise eine ellipsenförmige Querschnittsgestaltung des Durchbruches 42 erzielt, deren Größe sich schließlich auf die kreisrunde Form vergrößern läßt, die bei 46 wiedergegeben ist.

Die rechts in der Mitte der Fig. 2 wiedergegebene Zeichnung zeigt einen Lochboden mit einem ovalen Durchbruch 47, während die darunterstehende Darstellung einen Durchbruch 48 mit mehreckigem, d.h. quadratischem Umriß zeigt.

Die dargestellten ebenen Lochböden lassen sich auch gekrümmt ausführen, wenn die Druckdifferenz der Teilkammern dies notwendig oder zweckmäßig erscheinen lassen. Die Umrißform der beschriebenen Lochböden ergibt sich aus der Rohrform des Mantels, welcher das Rohrbündel einschließt und ist daher nicht zwingend.

Patentansprüche:

1. Verteiler für Gas-Flüssigkeit-Gemische, der eine Kammer mit einem in ihrer Vorderwand angeordneten Einlaß für das Gemisch, welches aus dem aus einem oder mehreren Gasen zusammengesetzten Dispersionsmittel und der darin verteilten, von einer oder mehreren Flüssigkeiten gebildeten dispersen Phase besteht und einen in der Kammerrückwand angeordneten Auslaß aufweist, welcher von wenigstens einer, vorzugsweise jedoch mehreren Öffnungen gebildet wird, durch die das die Kammer durchströmende Gemisch abgeführt wird, z.B. Vorkammer eines Rohrbündel-Wärmeaustauschers , d a d u r c h   g e k e n n z e i c h n e t , daß in der Kammer (1) eine Vorkammer (26) mit einem hinter der den Einlaß (5) aufweisenden Kammervorderwand (3) angeordneten und gasdicht an den Kammerseitenwänden (2) befestigten Lochboden (24, 25) abgeteilt ist, dessen Durchbrüche (29, 30) das die Vorkammer verlassende Gemisch in eine Mehrzahl von stark beschleunigten Teilströmen (33, 34) aufteilen, welche in eine von dem Lochboden vor der den Auslaß (8-15) aufweisenden Kammerrückwand (7) abgeteilte Hauptkammer (28) oder in eine oder in die erste einer Mehrzahl von Zwischenkammern (27) gerichtet sind, wobei jede Zwischenkammer mit einem weiteren Lochboden (24, 25) gegen die folgende Zwischenkammer oder die Hauptkammer (28) abgeteilt ist.

**0153974**

2. Verteiler nach Anspruch 1 , d a d u r c h
g e k e n n z e i c h n e t , daß die unter sich
identischen Durchbrüche (29, 30, 35, 46) durchgehend gleiche Querschnitte aufweisen oder in der
Durchströmungsrichtung sich stetig verjüngende
und/oder erweiternde Durchbruchquerschnitte
(37, 38; 39, 40, 41) aufweisen, welche die sie
durchquerenden Teilströme (33, 34) auf die Durchbrüche (29) des folgenden Lochbodens (25) oder
die Öffnungen (16-33) des Auslasses der Kammerrückwand (7) richten.

3. Verteiler nach einem der Ansprüche 1 oder 2,
d a d u r c h           g e k e n n z e i c h n e t,
daß jedem Durchbruch (29) in einem die Hauptkammer
abteilenden Lochboden (25) eine Öffnung in einem
folgenden  Lochboden oder in der Kammerrückwand
zugeordnet ist, mit der sie ausgefluchtet ist.

4. Verteiler nach einem der Ansprüche 1 oder 2,
d a d u r c h           g e k e n n z e i c h n e t ,
daß die Lochböden (24, 25) und die Kammerrückwand
(7) sowie die Kammervorderwand (3) in parallelen
Ebenen angeordnet sind.

5. Verteiler nach einem der Ansprüche 1 bis 4,
d a d u r c h           g e k e n n z e i c h n e t,
daß die Durchbrüche eines Lochbodens zwei parallele,
den Lochboden bildende Scheiben (44, 45) durchsetzen,
die so angeordnet sind, daß sich ihre Durchbrüche
(42) ganz oder teilweise überdecken.

0153974

6. Verteiler nach Anspruch 5 , d a d u r c h
g e k e n n z e i c h n e t , daß die beiden einen
Lochboden (24, 25) bildenden Scheiben an ihren
einander zugekehrten Seiten (44) unmittelbar aufeinanderliegen und gegeneinander jeweils in ihrer
Ebene verschieblich sind.

7. Verteiler nach einem der Ansprüche 1 bis 6,
d a d u r c h    g e k e n n z e i c h n e t,
daß die Abstände der Lochböden (24, 25) voneinander und von der Kammerrückwand (7) bzw. der
Kammervorderwand (3) veränderlich und einstellbar
sind.

8. Verteiler nach einem der Ansprüche 1 bis 7,
d a d u r c h    g e k e n n z e i c h n e t,
daß die Kammerrückwand (7) den Rohrboden eines
Rohrbündelaustauschers bildet.

**Fig.1**

**Fig.2**

Europäisches
Patentamt

**EUROPÄISCHER RECHERCHENBERICHT**

**0153974**
Nummer der Anmeldung

EP 84 10 2575

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | DE-C-1 126 358 (WIEGAND APPARATEBAU) <br> * Anspruch 1; Spalte 4, Zeilen 33-43; Figuren 1,2 * | 1-4,7 8 | B 01 D 1/00 |
| A | DE-A-2 707 966 (VEREINIGTE FÜLLKÖRPER-FABRIKEN) <br> * Anspruch 1; Seite 3, Absatz 2; Figuren 1-4 * | 1-4 | |
| A | DE-A-2 310 027 (KUREHA KAGAKU KOGYO) <br> * Anspruch 1 * | 1 | |
| A | DE-C- 637 351 (H. CRAMER) <br> * Ansprüche 1,2; Figuren 1,2 * | 5,6 | |

RECHERCHIERTE
SACHGEBIETE (Int. Cl.4)

B 01 D 1/00
B 01 D 3/00
B 01 D 3/18
B 01 F 3/04
B 01 F 5/06
B 01 J 4/00
F 25 D 17/08
F 28 D 3/04
F 28 F 9/02
F 28 F 25/10

Der vorliegende Recherchenbericht wurde für alle Patentansprüche erstellt.

| Recherchenort <br> BERLIN | Abschlußdatum der Recherche <br> 31-10-1984 | Prüfer <br> KUEHN P |
|---|---|---|

EPA Form 1503. 03.82

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument